(19) Europäisches Patentamt / European Patent Office / Office européen des brevets

(11) **EP 3 234 913 B1**

(12) **FASCICULE DE BREVET EUROPEEN**

(45) Date de publication et mention
de la délivrance du brevet:
**05.05.2021 Bulletin 2021/18**

(21) Numéro de dépôt: **15817958.0**

(22) Date de dépôt: **01.12.2015**

(51) Int Cl.:
*G06T 7/44* *(2017.01)*       *G06T 7/00* *(2017.01)*

(86) Numéro de dépôt international:
**PCT/FR2015/053268**

(87) Numéro de publication internationale:
**WO 2016/097520 (23.06.2016 Gazette 2016/25)**

(54) **PROCEDE DE DETECTION DE DEFAUT SUR UNE SURFACE DE PNEUMATIQUE**

VERFAHREN ZUR ERKENNUNG EINES DEFEKTS AUF EINER OBERFLÄCHE EINES REIFENS

METHOD FOR DETECTING A DEFECT ON A SURFACE OF A TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2014 FR 1462452**

(43) Date de publication de la demande:
**25.10.2017 Bulletin 2017/43**

(73) Titulaire: **Compagnie Générale des Etablissements Michelin**
**63000 Clermont-Ferrand (FR)**

(72) Inventeurs:
• **ARVIS, Vincent**
**63040 Clermont-Ferrand Cedex 9 (FR)**
• **JEULIN, Dominique**
**63040 Clermont-Ferrand Cedex 9 (FR)**
• **BILODEAU, Michel**
**63040 Clermont-Ferrand Cedex 9 (FR)**

(74) Mandataire: **Roussy, Delphine**
**M. F. P. MICHELIN**
**23, place des Carmes-Déchaux**
**Service juridique - Propriété Intellectuelle**
**DCJ/PI - F35 - Site de Ladoux**
**63040 Clermont-Ferrand Cedex 9 (FR)**

(56) Documents cités:
EP-A1- 2 295 930       WO-A1-2013/045594
FR-A1- 2 974 219       FR-A1- 2 974 220
US-B2- 7 088 442

**Description**

L'invention concerne les procédés de détection de défaut sur une surface de pneumatique.

On connait une méthode permettant la recherche automatique de défauts présents sur une surface de pneumatique. Elle consiste, dans un premier temps, à acquérir des images en deux ou trois dimensions de la surface par des techniques de vision industrielle, au moyen de capteurs. Ces images sont ensuite analysées par des moyens automatisés pour localiser d'éventuels défauts sur la surface. Pour ce faire, les moyens automatisés analysent un ou plusieurs paramètres de texture de l'image, pour, d'une part, segmenter l'image, c'est-à-dire séparer l'image en régions dans lesquelles le ou les paramètres de texture sont différents, et, d'autre part, classifier l'image, c'est-à-dire faire correspondre l'image ou les images segmentées à un groupe d'images d'une base d'images de référence, dans le but d'identifier d'éventuels défauts.

La séparation de l'image en régions dans lesquelles les paramètres de texture sont différents consiste, par exemple mais non limitativement, à séparer l'image en une région correspondant à une surface lisse, une région correspondant à une surface rugueuse et une région correspondant à une surface striée.

Toutefois, cette méthode ne permet pas toujours d'obtenir des résultats satisfaisants, notamment dans le cas où la surface à analyser est une surface interne du pneumatique. En effet, celle-ci présente un motif aléatoire répétitif, communément désigné par l'expression « peau de crapaud ». De ce fait, l'aspect d'une surface interne saine, exempte de défaut, est lui-même aléatoire. Par conséquent, il s'avère impossible de distinguer une région saine présentant un motif « peau de crapaud » d'une région présentant un défaut, ce qui met en échec la méthode présentée plus haut.

Les documents US 7 088 442 B2 et WO 2017/045594 A1 divulguent chacun un procédé de détection de défaut selon le préambule de la revendication 1.

Un but de l'invention est d'améliorer le procédé de détection de défaut sur la surface de pneumatique.

A cet effet, on prévoit selon l'invention un procédé de détection de défaut sur une surface d'un pneumatique selon la revendication 1.

La notion de gradient de texture sera explicitée ultérieurement dans la description, notamment à l'aide d'exemples.

Ce procédé permet ainsi de détecter les hétérogénéités de texture dans l'image de la surface du pneumatique. Ces hétérogénéités sont toujours associées à des défauts. En d'autres termes, les régions de l'image à faible gradient sont homogènes et exemptes de défaut, et les régions de l'image à fort gradient présentent une hétérogénéité, caractéristique d'un défaut. Le seuillage de l'image de gradient permet ensuite à des moyens automatisés ou humains de visualiser aisément l'emplacement des défauts sur l'image. De plus, le calcul de valeurs d'un gradient de plusieurs paramètres de texture permet d'affiner le procédé en lui permettant de détecter de manière plus fiable la présence de défauts sur la surface qu'un procédé dans lequel on calcule des valeurs d'un gradient d'un unique paramètre de texture.

Avantageusement, la surface du pneumatique est une surface interne du pneumatique.

Grâce au calcul de valeurs du gradient de texture de l'image de la surface, le procédé permet la détection de défaut même sur une surface présentant un motif aléatoire répétitif.

Avantageusement, les moyens automatisés acquièrent l'image de la surface par triangulation laser.

Cette technique permet d'obtenir une image de la surface de très bonne qualité.

Avantageusement, les moyens automatisés calculent les valeurs du gradient en une sélection de pixels d'une partie de l'image de la surface.

On réduit ainsi le nombre de calculs nécessaires à la détermination de l'image du gradient, ce qui permet de réduire la durée du procédé.

Avantageusement, les moyens automatisés calculent un gradient de niveau de gris dans l'image de la surface.

Le niveau de gris est un paramètre de texture de l'image dont il est aisé de calculer les valeurs du gradient.

Avantageusement, le seuillage est effectué par hystérésis.

Cette méthode de seuillage est efficace et simple à mettre en œuvre.

On prévoit également selon l'invention un programme d'ordinateur, comprenant des instructions de code aptes à commander l'exécution d'un procédé tel que décrit plus haut lorsqu'il est exécuté sur un ordinateur.

On prévoit aussi selon l'invention un support de stockage lisible par un ordinateur contenant des instructions qui, lorsqu'elles sont exécutées par un ordinateur, font mettre en œuvre à cet ordinateur un des procédés tels que décrits plus haut.

On prévoit aussi selon l'invention une installation de détection de défaut sur une surface d'un pneumatique selon la revendication 10.

Avantageusement, les moyens automatisés sont en outre aptes à acquérir l'image de la surface du pneumatique.

On va maintenant décrire un mode de réalisation de l'invention à l'appui des dessins annexés sur lesquels :

- la figure 1 est une vue schématique d'une installation de détection de défaut sur une surface de pneumatique selon l'invention, et

- la figure 2 est un schéma illustrant le déroulement des étapes du procédé de détection de défaut selon l'invention.

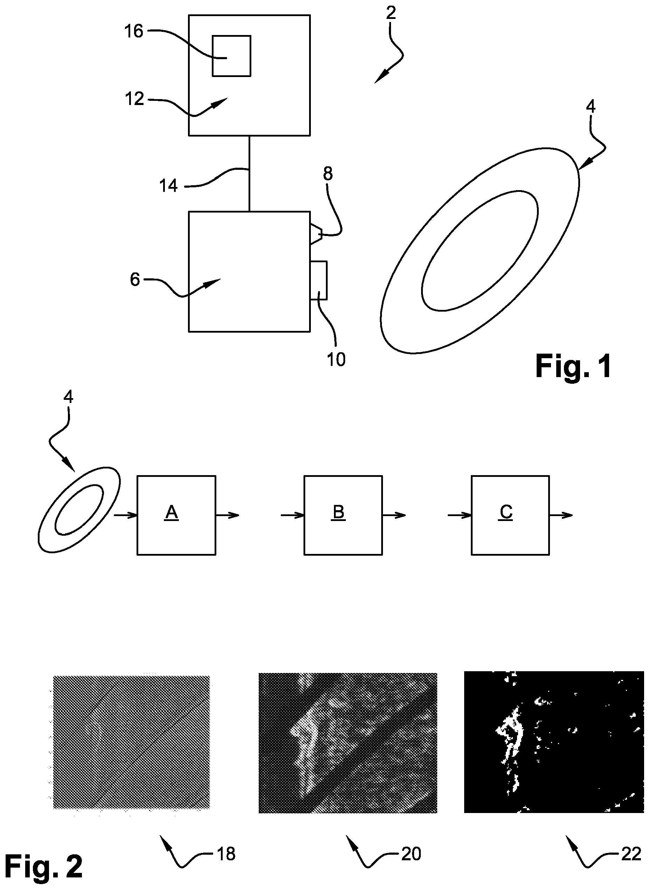

On a illustré en figure 1 une installation 2 selon l'invention. Cette installation 2 est destinée à détecter des défauts sur une surface d'un pneumatique 4. On considère ici que la surface en question est une surface interne du pneumatique 4, mais on peut prévoir qu'il s'agisse d'une autre surface de ce pneumatique 4.

L'installation 2 comprend des moyens automatisés d'acquisition 6 aptes à acquérir une image de la surface du pneumatique 4. Les moyens automatisés d'acquisition 6 acquièrent l'image de la surface par triangulation laser, et comportent à cet effet notamment une source laser 8 et un capteur 10. La triangulation laser étant une méthode d'acquisition connue, on ne la décrira pas plus en détails dans ce qui suit. On pourra par ailleurs prévoir que l'image de la surface soit acquise plutôt par stéréophotométrie, ou bien à l'aide d'une caméra dite de type vision industrielle.

L'installation 2 comprend également des moyens automatisés de calcul 12 connectés aux moyens automatisés d'acquisition 6 par un organe de connexion 14 de sorte qu'ils peuvent échanger des données. Ces moyens automatisés de calcul 12 comportent notamment un calculateur 16. On verra plus loin quelles sont les fonctions des moyens automatisés de calcul 12.

On va maintenant décrire un procédé de détection de défaut sur la surface du pneumatique 4 selon l'invention, mis en œuvre par l'installation 2, et notamment par ses moyens automatisés 6, 12 avec un programme d'ordinateur comprenant des instructions de code aptes à commander l'exécution du procédé de détection lorsqu'il est exécuté par ces moyens. En l'espèce, le programme d'ordinateur est stocké sur un support de stockage lisible par les moyens automatisés 6, 12. Le programme d'ordinateur est par ailleurs mis à disposition en vue de son téléchargement sur un réseau de télécommunications.

En référence à la figure 2, lors de l'étape A, l'image de la surface interne du pneumatique 4 est tout d'abord acquise par triangulation laser grâce aux moyens automatisés d'acquisition 6. On obtient ainsi une image dite de surface 18. Cette image de surface 18 est alors transmise aux moyens automatisés de calcul 12 grâce à l'organe de connexion 14. Cette image est en noir et blanc et comprend des niveaux de gris.

Ensuite, lors de l'étape **B,** les moyens automatisés de calcul 12 calculent des valeurs d'un gradient de texture à partir de l'image de surface 18, grâce au calculateur 16. On va décrire dans ce qui suit un algorithme permettant de calculer ces valeurs.

On sélectionne tout d'abord un paramètre de texture. Dans le domaine du traitement de l'image, il est connu d'utiliser l'un des paramètres suivants : matrices de cooccurrence, paramètres d'Haralick, paramètres morphologiques (tels que des granulométries par ouverture ou par fermeture), un motif binaire local (communément désigné par LBP, sigle pour les termes anglo-saxons « Local Binary Pattern »). Ces paramètres ont tous en commun le fait qu'ils correspondent à des statistiques spatiales sur des valeurs de niveaux de gris de l'image. Plus généralement, le calcul des valeurs de gradient de texture peut s'appliquer à tout paramètre de texture et à toute statistique calculée sur l'image.

On suppose dans la suite que les moyens automatisés de calcul 12 calculent des valeurs de gradient de plusieurs paramètres de texture dans l'image de la surface. On note n ce nombre de paramètres.

Soit $F_{i,j}$ le vecteur paramètres contenant les n paramètres calculés sur une fenêtre rectangulaire de dimensions $W_i \times W_j$ centrée sur un pixel (*i,j*) de l'image de surface 18, que l'on suppose rectangulaire et de dimensions $S_i \times S_j$.

Ce vecteur $F_{i,j}$ est calculé pour tout pixel (i,j) de l'image de surface 18, hormis en ses bords, c'est-à-dire

$$\forall i \in \left[\frac{W_i}{2}, S_i - \frac{W_i}{2}\right] \text{ et } \forall j \in \left[\frac{W_j}{2}, S_j - \frac{W_j}{2}\right].$$ On obtient une hyper-matrice F de taille ($S_i$ - $W_i$, $S_j$ - $W_j$, n).

Soit *d* une métrique rendant compte de la distance entre deux vecteurs $F_{i,j}$. On rappelle qu'une métrique est une fonction de $\mathbb{R}^n \times \mathbb{R}^n$ dans l'ensemble $\mathbb{R}$ qui satisfait les conditions suivantes pour tous $F_{i,j}$, $F_{k,l}$, $F_{m,n}$ dans $\mathbb{R}^n$:

$d(F_{i,j}, F_{k,l}) = 0$ si et seulement si $F_{i,j} = F_{k,l}$

$$d\left(F_{i,j}, F_{k,l}\right) = d\left(F_{k,l}, F_{i,j}\right) \text{ (symétrie)}$$

$$d\left(F_{i,j}, F_{m,n}\right) \leq d\left(F_{i,j}, F_{k,l}\right) + d\left(F_{k,l}, F_{m,n}\right) \text{ (inégalité triangulaire).}$$

La distance de Mahalanobis et la distance du $\chi^2$ entre histogrammes sont des exemples de métrique. On peut choisir une métrique quelconque. Toutefois, certaines métriques sont plus adaptées à certains choix de paramètres de texture. A titre d'exemples de réalisation non limitatifs, les combinaisons de paramètres et de métriques suivantes permettent d'obtenir des résultats satisfaisants :

- paramètres d'Haraclick (vecteur comprenant n = 5 paramètres de texture) en combinaison avec la distance euclidienne,

- motif binaire local (vecteur comprenant $n$ = 25 paramètres de texture) en combinaison avec la distance du $\chi^2$ entre histogrammes, et
- histogramme de niveaux de gris créés après une suite de transformations morphologiques.

La valeur du gradient de texture en un pixel ($i,j$) de l'image de surface 18 pour un vecteur-translation donné $\vec{t}$ = ($a, b$) est alors la distance, au sens de la métrique choisie, entre deux points de F distants de $\vec{t}$, divisée par la norme de $\vec{t}$ :

$$G_{i,j}^{\vec{t}=(a,b)} = \frac{d\left(F_{i-\frac{a}{2},j-\frac{b}{2}}, F_{i+\frac{a}{2},j+\frac{b}{2}}\right)}{\sqrt{a^2 + b^2}}$$

En pratique, les moyens automatisés de calcul 12 calculent les valeurs de deux gradients de texture : un gradient de texture vertical $\vec{t_{vert}}$ = ($t_{vert}$, 0) et un gradient de texture horizontal $\vec{t_{hor}}$ = (0, $t_{hor}$). Leur norme est alors déduite :

$$\left\| G_{i,j}^{t_{vert},t_{hor}} \right\| = \sqrt{\left(G_{i,j}^{\vec{t_{vert}}=(t_{vert},0)}\right)^2 + \left(G_{i,j}^{\vec{t_{hor}}=(0,t_{hor})}\right)^2}$$

Les valeurs de distance $t_{vert}$ et $t_{hor}$ sont choisies de manière à ce que les fenêtres de calcul des paramètres de texture ne se chevauchent pas, soit $t_{vert}$ = $W_i$ et $t_{hor}$ = $W_j$.

Par soucis d'optimisation du temps de calcul, le calcul des valeurs de gradient peut se faire non pour chaque pixel de l'image d'origine, mais par pas de $step_i$ pixels verticalement et $step_j$ pixels horizontalement. En d'autres termes, les moyens automatisés de calcul 12 calculent des valeurs du gradient de texture en une sélection de pixels d'une partie de l'image. Cela revient à effectuer une décimation sur l'hyper-matrice $F$. Soit $\hat{F}$ le sous-échantillon de $F$ :

$$\hat{F}_{i,j} = F_{i \times step_i, j \times step_j}$$

On a alors :

$$\hat{G}_{i,j}^{\vec{t}=(a,b)} = \frac{d\left(\hat{F}_{i-\frac{a}{2step_i},j-\frac{b}{2step_j}}, \hat{F}_{i+\frac{a}{2step_i},j+\frac{b}{2step_j}}\right)}{\sqrt{a^2 + b^2}}$$

A titre d'exemple de réalisation non limitatif, on peut choisir les paramètres de la manière suivante :

$W_i$ = $W_j$ = 40 *pixels,*
$t_{vert}$ = $t_{hor}$ = 40 *pixels,* et
$step_i$ = $step_j$ = 5 *pixels.*

On choisit ici une taille de fenêtre unitaire $W_i$ = $W_j$ = *1 pixel,* et les moyens automatisés de calcul 12 calculent un gradient de niveau de gris dans l'image de surface 18, de sorte que G est ce qu'on appelle communément le gradient de l'image de surface 18.

Ensuite, les moyens automatisés de calcul 12 déterminent une image du gradient 20 à l'aide des valeurs du gradient calculées selon l'algorithme décrit plus haut.

Enfin, lors de l'étape C, les moyens automatisés de calcul 12 effectuent un seuillage de l'image de gradient 20 pour obtenir une image seuillée 22. Le seuillage est effectué par hystérésis. L'image seuillée 22 peut être représentée par une image en noir et blanc, également appelée image binaire. Cette image ne comprend donc que deux types de pixels, à savoir des pixels noirs et des pixels blancs.

Les moyens automatisés 6, 12 de l'installation 2 sont donc aptes à :

- calculer des valeurs d'un gradient de texture de l'image de la surface du pneumatique 4,
- déterminer l'image du gradient 20, et

- effectuer un seuillage de l'image du gradient pour obtenir l'image seuillée 22.

L'image seuillée 22 est alors soumise à un opérateur pour qu'il puisse visualiser l'emplacement de défauts éventuels sur la surface interne du pneumatique 4. Dans l'image seuillée 22 illustrée en figure 2, les zones blanches correspondent aux régions de la surface interne du pneumatique 4 à fort gradient, caractéristiques de la présence de défauts, et les zones noires correspondent aux régions de la surface à faible gradient.

En fonction des caractéristiques des éventuels défauts, telles que leur taille et leur nombre, l'opérateur pourra décider si une action doit être entreprise à l'égard du pneumatique 4, comme par exemple sa mise au rebut ou sa destruction. On pourra par ailleurs prévoir que les moyens automatisés de calcul 12 eux-mêmes effectuent la visualisation de l'image seuillée 22 et la décision d'entreprendre ou non une action à l'égard du pneumatique 4.

Bien entendu, on pourra apporter à l'invention de nombreuses modifications sans sortir du cadre de celle-ci.

On pourra prévoir d'utiliser l'installation de détection de défaut sur une surface d'un article autre qu'un pneumatique.

## Revendications

1. Procédé de détection de défaut sur une surface d'un pneumatique (4) dans lequel des moyens automatisés (6, 12) :

   - calculent des valeurs d'un gradient de plusieurs paramètres de texture à partir d'une image de la surface (18) du pneumatique (4),
   - déterminent une image du gradient (20), et
   - effectuent un seuillage de l'image du gradient pour obtenir une image seuillée (22),

   **caractérisé en ce qu'**au moins un des paramètres de texture est choisi parmi la liste suivante matrices de cooccurrence, paramètres d'Haralick, paramètres morphologiques, motif binaire local.

2. Procédé de détection selon la revendication précédente, dans lequel la surface du pneumatique (4) est une surface interne du pneumatique (4).

3. Procédé de détection selon l'une quelconque des revendications précédentes, dans lequel les moyens automatisés (6, 12) acquièrent l'image de la surface (18) par triangulation laser.

4. Procédé de détection selon l'une quelconque des revendications précédentes, dans lequel les moyens automatisés (6, 12) calculent les valeurs du gradient en une sélection de pixels d'une partie de l'image de la surface (18).

5. Procédé de détection selon l'une quelconque des revendications précédentes, dans lequel les moyens automatisés (6, 12) calculent un gradient de niveau de gris dans l'image de la surface (18).

6. Procédé de détection selon l'une quelconque des revendications précédentes, dans lequel le seuillage est effectué par hystérésis.

7. Programme d'ordinateur **caractérisé en ce qu'**il comprend des instructions de code aptes à commander l'exécution d'un procédé selon l'une quelconque des revendications précédentes lorsqu'il est exécuté sur un ordinateur.

8. Procédé de mise à disposition du programme de la revendication précédente en vue de son téléchargement sur un réseau de télécommunications.

9. Support de stockage lisible par un ordinateur contenant des instructions qui, lorsqu'elles sont exécutées par un ordinateur, font mettre en œuvre à cet ordinateur un procédé selon l'une quelconque des revendications 1 à 6 et 8.

10. Installation (2) de détection de défaut sur une surface d'un pneumatique (4), comprenant des moyens automatisés (4) aptes à :

    - calculer des valeurs d'un gradient de plusieurs paramètres de texture à partir d'une image de la surface (18) du pneumatique (4),
    - déterminer une image du gradient (20), et
    - effectuer un seuillage de l'image du gradient pour obtenir une image seuillée (22),

**caractérisée en ce qu'**au moins un des paramètres de texture est choisi parmi la liste suivante matrices de cooccurrence, paramètres d'Haralick, paramètres morphologiques, motif binaire local.

11. Installation (2) de détection selon la revendication précédente, dans laquelle les moyens automatisés (6, 12) sont en outre aptes à acquérir l'image de la surface (18) du pneumatique (4).

**Patentansprüche**

1. Verfahren zur Erfassung eines Fehlers an einer Fläche eines Luftreifens (4), bei dem automatisierte Einrichtungen (6, 12):

    - Werte eines Gradienten mehrerer Texturparameter ausgehend von einem Bild der Fläche (18) des Luftreifens (4) berechnen,
    - ein Bild des Gradienten (20) bestimmen, und
    - eine Schwellwertbildung des Bilds des Gradienten ausführen, um ein Schwellwertbild (22) zu erhalten,

    **dadurch gekennzeichnet, dass** mindestens einer der Texturparameter aus der folgenden Liste ausgewählt wird: Kookkurenzmatrizen, Haralick-Parameter, morphologische Parameter, lokales Binärmuster.

2. Erfassungsverfahren nach dem vorhergehenden Anspruch, wobei die Fläche des Luftreifens (4) eine Innenfläche des Luftreifens (4) ist.

3. Erfassungsverfahren nach einem der vorhergehenden Ansprüche, wobei die automatisierten Einrichtungen (6, 12) das Bild der Fläche (18) durch Lasertriangulation erfassen.

4. Erfassungsverfahren nach einem der vorhergehenden Ansprüche, wobei die automatisierten Einrichtungen (6, 12) die Werte des Gradienten in einer Auswahl von Pixeln eines Teils des Bilds der Fläche (18) berechnen.

5. Erfassungsverfahren nach einem der vorhergehenden Ansprüche, wobei die automatisierten Einrichtungen (6, 12) einen Graustufengradienten im Bild der Fläche (18) berechnen.

6. Erfassungsverfahren nach einem der vorhergehenden Ansprüche, wobei die Schwellwertbildung durch Hysterese ausgeführt wird.

7. Computerprogramm, **dadurch gekennzeichnet, dass** es Codeanweisungen enthält, die die Ausführung eines Verfahrens nach einem der vorhergehenden Ansprüche steuern können, wenn es auf einem Computer ausgeführt wird.

8. Verfahren zur Bereitstellung des Programms nach dem vorhergehenden Anspruch für sein Herunterladen über ein Telekommunikationsnetzwerk.

9. Computerlesbarer Speicherträger, der Anweisungen enthält, die, wenn sie von einem Computer ausgeführt werden, ein Verfahren nach einem der Ansprüche 1 bis 6 und 8 von diesem Computer durchführen lassen.

10. Anlage (2) zur Fehlererfassung an einer Fläche eines Luftreifens (4), die automatisierte Einrichtungen (4) enthält, die in der Lage sind:

    - Werte eines Gradienten mehrerer Texturparameter ausgehend von einem Bild der Fläche (18) des Luftreifens (4) zu berechnen,
    - ein Bild des Gradienten (20) zu bestimmen, und
    - eine Schwellwertbildung des Bilds des Gradienten auszuführen, um ein Schwellwertbild (22) zu erhalten,

    **dadurch gekennzeichnet, dass** mindestens einer der Texturparameter aus der folgenden Liste ausgewählt wird: Kookkurenzmatrizen, Haralick-Parameter, morphologische Parameter, lokales Binärmuster.

11. Erfassungsanlage (2) nach dem vorhergehenden Anspruch, wobei die automatisierten Einrichtungen (6, 12) außerdem in der Lage sind, das Bild der Fläche (18) des Luftreifens (4) zu erfassen.

**Claims**

1. Method for detecting a defect on a surface of a tyre (4), **characterized in that** the automated means (6, 12):

   - calculate values of a gradient of a plurality of texture parameters from an image of the surface (18) of the tyre (4),
   - determine an image of the gradient (20), and
   - threshold the image of the gradient, in order to obtain a thresholded image (22),

   **characterized in that** at least one of the texture parameters is chosen among the following list; co-occurrence matrices, Haralick parameters, morphological parameters and local binary pattern.

2. Detection method according to the preceding claim, wherein the surface of the tyre (4) is an inner surface of the tyre (4).

3. Detection method according to any of the preceding claims, wherein the automated means (6, 12) acquire the image of the surface (18) by laser triangulation.

4. Detection method according to any of the preceding claims, wherein the automated means (6, 12) calculate the values of the gradient in a selection of pixels of a part of the image of the surface (18).

5. Detection method according to any of the preceding claims, wherein the automated means (6, 12) calculate a grey level gradient in the image of the surface (18).

6. Detection method according to any of the preceding claims, wherein the thresholding is performed by hysteresis.

7. Computer program, **characterized in that** it comprises coded instructions adapted to command the execution of a method according to any of the preceding claims when it is executed on a computer.

8. Method of making the program according to the preceding claim available for downloading on a telecommunications network.

9. Computer-readable storage medium containing instructions which, when executed by a computer, cause this computer to execute a method according to any of Claims 1 to 6 and 8.

10. Installation (2) for detecting a defect on a surface of a tyre (4), **characterized in that** it comprises automated means (4) adapted for:

    - calculating values of a gradient of a plurality of texture parameters from an image of the surface (18) of the tyre (4),
    - determining an image of the gradient (20), and
    - thresholding the image of the gradient, in order to obtain a thresholded image (22),

    **characterized in that** at least one of the texture parameters is chosen among the following list; co-occurrence matrices, Haralick parameters, morphological parameters and local binary pattern.

11. Detection installation (2) according to the preceding claim, wherein the automated means (6, 12) are also adapted for acquiring the image of the surface (18) of the tyre.

16

12

2

14

8

6

10

4

**Fig. 1**

4

| A | B | C |

**Fig. 2**

18

20

22

## RÉFÉRENCES CITÉES DANS LA DESCRIPTION

**Documents brevets cités dans la description**

- US 7088442 B2
- WO 2017045594 A1